(19) Europäisches Patentamt / European Patent Office / Office européen des brevets

(11) **EP 1 427 156 B1**

(12) **FASCICULE DE BREVET EUROPEEN**

(45) Date de publication et mention
de la délivrance du brevet:
**07.03.2007 Bulletin 2007/10**

(51) Int Cl.:
*H04L 25/02* *(2006.01)* *H04J 3/06* *(2006.01)*

(21) Numéro de dépôt: **03292839.2**

(22) Date de dépôt: **14.11.2003**

(54) **Procédé de détection de rafales de signal et système récepteur pour la mise en oeuvre du procédé**

Verfahren und Empfänger zur Burstdetektion

Method and receiver for burst detection

(84) Etats contractants désignés:
**DE FR GB**

(30) Priorité: **04.12.2002 FR 0215273**

(43) Date de publication de la demande:
**09.06.2004 Bulletin 2004/24**

(73) Titulaire: **Nortel Networks Limited
St Laurent, Québec H4S 2A9 (CA)**

(72) Inventeurs:
• **Lucidarme, Thierry
78180 Montigny-Le-Bretonneux (FR)**
• **Ben Rached, Nidham
75017 Paris (FR)**

(74) Mandataire: **Loisel, Bertrand
Cabinet Plasseraud
52 rue de la Victoire
75440 Paris Cedex 09 (FR)**

(56) Documents cités:
**EP-A- 0 923 207 US-A- 6 144 709
US-B1- 6 487 187**

• **IN-KYUNG KIM ET AL: "Comparisons of CFAR burst detection schemes for TDMA systems employing constant modulus modulation format" MILITARY COMMUNICATIONS CONFERENCE, 1998. MILCOM 98. PROCEEDINGS., IEEE BOSTON, MA, USA 18-21 OCT. 1998, NEW YORK, NY, USA,IEEE, US, 18 octobre 1998 (1998-10-18), pages 360-364, XP010307792 ISBN: 0-7803-4506-1**

EP 1 427 156 B1

**Description**

La présente invention concerne la détection, par un récepteur, de rafales de signal transmises sur un canal radio dans un système de communication.

Elle trouve une application notamment dans la détection de rafales courtes émise dans un réseau de radiocommunication. Ces rafales peuvent être de différents types, comme des rafales de synchronisation initiale ou des rafales d'accès aléatoire au réseau mobile. Ce dernier cas sera plus particulièrement développé par la suite, sans que cela soit limitatif.

Lorsqu'un terminal mobile d'un réseau de communication souhaite disposer de ressources de communication, par exemple pour effectuer un appel, il exécute une requête au réseau qui gère et distribue les ressources. Cette requête d'accès aléatoire consiste généralement en la transmission d'un message dont le préambule est une rafale de signal représentant une séquence numérique prédéterminée. Ce message est émis sur un canal radio montant écouté par un système de réception du réseau. Dans les systèmes de radiocommunication tels que le GSM (« Global System for Mobile communications ») et l'UMTS (« Universal Mobile Telecommunication System »), ce canal est appelé RACH ou PRACH (« Packet Random Access CHannel »). Le format d'un tel message est notamment décrit à la section 5.2.2.2 de la spécification technique TS 25.211 version 5.2.0 Release 5, « Physical channels and mapping of transport channels onto physical channels (FDD) », publiée en septembre 2002 par l'organisation 3GPP.

Une détection fiable des rafales d'accès aléatoire sur le RACH est importante car le taux d'échec d'établissement de communications vu d'un utilisateur radiomobile en dépend directement.

Une amélioration de la fiabilité de détection est particulièrement intéressante pour des systèmes de réception qui comprennent des antennes intelligentes (« smart antennas ») sectorielles ou omnidirectionnelles.

Dans le système UMTS, la séquence numérique prédéterminée émise sur le canal RACH par un terminal mobile a une taille de 4096 "chips", un chip étant un élément de code conformément au codage utilisé dans le système. Les données échangées sont constituées en trames de 10 ms, elles-mêmes subdivisées en 15 intervalles de temps (ou "slots") de 666 µs, correspondant à 2560 chips. Ainsi, la rafale de signal associée à la séquence numérique émis sur le RACH est reçu à l'intérieur d'un intervalle correspondant à deux slots consécutifs.

Lorsque le réseau radio souhaite déterminer si une rafale d'accès aléatoire a été transmise sur un canal RACH, il calcule pour les 1024 (= 2 x 2560 - 4096) positions possibles de la séquence numérique de la rafale à l'intérieur de deux slots consécutifs, une corrélation entre la séquence telle que détectée et la séquence numérique prédéterminée qui est connue du réseau.

Un critère doit être défini pour décider, à partir d'une telle corrélation, si la séquence numérique prédéterminée est présente. Celui-ci est habituellement basé sur le niveau énergétique de la corrélation, qui est comparé à un niveau seuil prédéfini.

Cependant, selon les conditions de propagation du canal radio utilisé, le signal reçu par le réseau radio est plus ou moins atténué. Il en résulte que la fixation du seuil est délicate: un seuil trop bas cause de nombreuses fausses détections qui perturbent le système, tandis qu'un seuil trop élevé fait manquer des requêtes d'accès provenant de terminaux relativement éloignés de la station de base.

Une rampe de puissance peut être utilisée par le terminal mobile pour retransmettre régulièrement la rafale d'accès au réseau sur le canal RACH avec, pour chaque nouvelle transmission une puissance d'émission augmentée, tant que le réseau n'a pas répondu à sa demande de ressources. Cette méthode permet d'améliorer la détection de la rafale par le réseau radio, notamment dans le cas où la faible puissance d'émission des premières transmissions est à l'origine de l'absence de détection de la rafale sur le RACH.

Toutefois, par la répétition de la rafale d'accès aléatoire sur le RACH, cette méthode occupe le canal au détriment des requêtes éventuelles des autres utilisateurs. En outre, la puissance élevée des signaux ainsi répétés peut créer des interférences nuisibles dans le système.

Le document "Comparisons of CFAR burst detection schemes for TDMA systems employing constant modulus modulation format" de In-Kyung Kim et Wonjin Sung, Military Communications Conf., IEEE, 18.10.1998, pages 360-364, compare les performances de deux méthodes de détection de signal contenant une séquence numérique prédéterminée, respectivement nommées SWRD (Single Window Ratio Detection) et DWRD (Double Window Ratio Detection). Selon ces méthodes, une grandeur de détection est évaluée à partir d'une corrélation entre un signal reçu à un système récepteur et la séquence numérique prédéterminée, avant d'être comparée à un seuil $\alpha$. Ce document ne divulgue pas une forme particulière pour la grandeur de détection.

Un but de la présente invention est de proposer une méthode de détection de signaux prédéfinis qui permet d'atténuer les inconvénients des méthodes connues.

Un autre but de l'invention est d'enrichir la prise en compte des conditions de propagation sur le canal radio pour améliorer la détection des rafales transmises.

L'invention propose ainsi un procédé de détection d'une rafale de signal transmise à l'initiative d'un émetteur sur un canal radio écouté par un système récepteur, la rafale transmise représentant une séquence numérique prédéterminée, dans lequel on estime des paramètres de canal représentant un comportement statistique du canal radio et on évalue une grandeur de détection à partir des paramètres de canal estimés et d'une corrélation entre un signal reçu au système récepteur et la séquence numérique prédéterminée. Selon l'invention, lesdits paramètres de canal estimés comprennent des moments d'ordre supérieur à 2 du gain sur le canal radio.

Ainsi, les conditions de propagation du canal radio sont finement prises en compte, de manière à détecter la rafale transmise avec une fiabilité accrue sur une large plage de l'atténuation qu'il est susceptible de subir.

L'invention propose également un système récepteur pour la mise en oeuvre d'un tel procédé de détection.

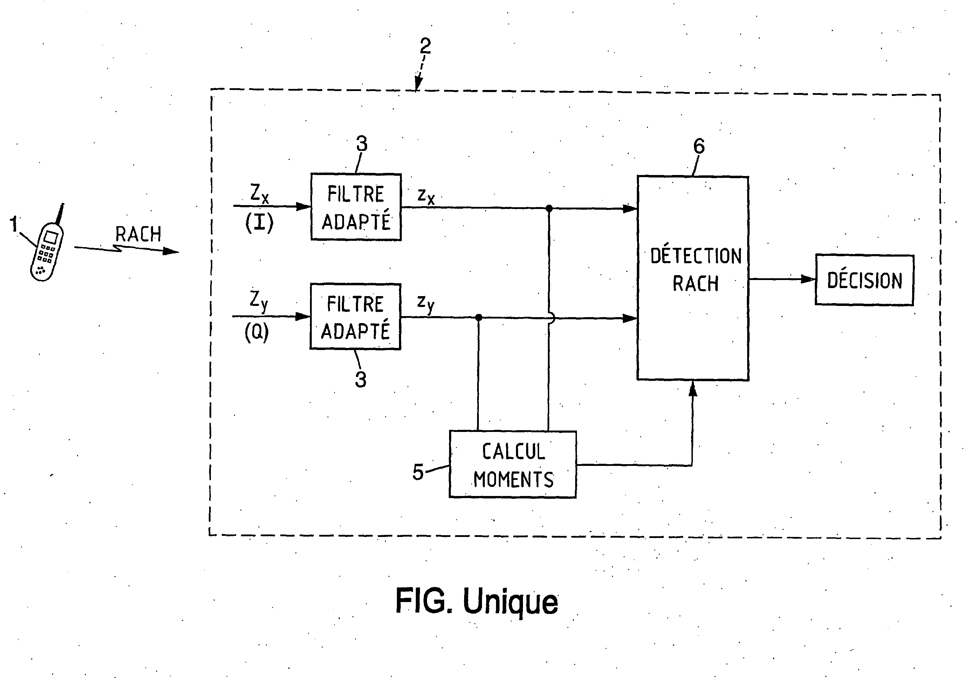

D'autres particularités et avantages de la présente invention apparaîtront dans la description ci-après d'exemples de réalisation non limitatifs, en référence au dessin annexé, dans lequel la figure unique est un schéma d'un système mettant en oeuvre l'invention.

On se place ci-après dans le cas non limitatif d'une réalisation de l'invention appliquée à la détection d'une rafale de signal d'accès aléatoire à un réseau radio cellulaire.

Le terminal mobile 1 émet une rafale de signal sur un canal de type RACH lorsqu'il souhaite accéder au réseau et obtenir de ce dernier des ressources de communication.

Le réseau est composé principalement d'un réseau coeur assurant la commutation des données et le raccordement à d'autres réseaux de communication, comme le RTCP (« Réseau Téléphonique Commuté Public »), et d'un réseau radio responsable des échanges de données et de signalisation avec des terminaux mobiles.

Le réseau radio comprend généralement des systèmes d'émission et de réception, appartenant à des stations de base, ainsi que des contrôleurs de stations de base assurant des fonctions de plus haut niveau que la simple transmission des données, comme la gestion des ressources radio ou de la mobilité par exemple. Certaines fonctions peuvent être exécutées indifféremment par les stations de base ou par les contrôleurs de stations de base. Certaines peuvent également être effectuées de façon partagée par ces entités.

Sur la figure, on considère une station de base incluant un système de réception 2 capable de recevoir des signaux émis notamment par le terminal 1. De façon avantageuse mais non restrictive, certaines des fonctions effectuées par le système de réception 2, qui seront détaillées par la suite, sont sous la responsabilité du contrôleur dont dépend cette station de base. Ce contrôleur 3 est appelé BSC (« Base Station Controller ») dans la terminologie utilisée dans le système GSM. Dans le système UMTS, la station de base est parfois nommée « Node B » et le contrôleur de station de base est appelé RNC (« Radio Network Controller »).

Le système de réception 2 illustré sur la figure comporte deux voies principales de réception, en phase (I) et en quadrature (Q). Le signal radio reçu est mélangé à deux ondes radio en quadrature à la fréquence porteuse. Après filtrage passe-bas, les deux composantes qui en résultent forment respectivement un signal en phase $Z_x$ et un signal en quadrature $Z_y$ qui, ensemble, peuvent être vus comme constituant un signal complexe $Z=Z_x+j.Z_y$.

Le signal Z comporte à la fois les signaux éventuellement émis par le terminal mobile 1 et les signaux résiduels constitués de bruit et d'interférences. Etant donné que les fréquences porteuses sont généralement partagées par plusieurs utilisateurs, les signaux transmis par d'autres terminaux mobiles constituent des interférences, semblables au bruit dans un système CDMA tel que l'UMTS. A chaque instant le système 2 reçoit donc des signaux $Z_x$, $Z_y$ constitués de séquences numériques sur chacune des deux voies I et Q.

La séquence numérique prédéterminée représentée par la rafale d'accès aléatoire est une séquence s de M échantillons (chips dans un système CDMA) ayant une longueur suffisante pour assurer une détection dans de bonnes conditions. Dans le cas de l'UMTS, elle est de M = 4096 chips, soit un peu plus d'une milliseconde (la cadence des chips est de 3,84 Mchip/s). Pour détecter la présence éventuelle d'une telle rafale, le système récepteur comporte deux filtres 3, respectivement sur les voies I et Q, qui sont adaptés à la séquence prédéterminée de chips, et qui réalisent l'opération z = Z.s*, où (.)* désigne le complexe conjugué. Le signal complexe $z = z_x + j.z_y$ produit par ces filtres 3 représente ainsi une corrélation entre le signal reçu et la séquence à détecter, calculée à la fréquence des chips. Les deux signaux réels $z_x$ et $z_y$, correspondent respectivement aux composantes réelle et imaginaire du signal détecté après filtrage adapté.

Ayant détecté le signal complexe $z = z_x + j z_y$, le système récepteur 2 effectue un calcul pour déterminer la vraisemblance selon laquelle ce signal z révèle la présence la séquence numérique connue émise sur le RACH par le terminal mobile 1.

Soient H1 l'hypothèse selon laquelle la rafale d'accès aléatoire a été émise sur le canal RACH et H0 l'hypothèse complémentaire selon laquelle seul du bruit est présent. On peut écrire le rapport des probabilités basées sur la connaissance du signal détecté z comme suit, selon la formule de Bayes :

$$P(H1/z) / P(H0/z) = \Big( P(z/H1) / P(z/H0) \Big) \times \Big( P(H1) / P(H0) \Big) \qquad (1)$$

où P(a/b) désigne la probabilité de a connaissant b.

Le système récepteur 2 considère que la rafale a été émise sur le RACH si ce rapport P(H1/z) / P(H0/z) est supérieur à un certain seuil c. En outre, le rapport $\dfrac{P(H1)}{P(H0)} = \dfrac{P(H1)}{1-P(H1)}$ est indépendant du signal détecté. On peut considérer que le rapport P(H1/z) / P(H0/z) est supérieur au seuil de détection c, si le rapport P(z/H1) / P(z/H0) est supérieur à un seuil c', tel que c' = c x P(H0) / P(H1).

Le système récepteur 2 évalue donc le rapport de probabilités P(z/H1) / P(z/H0) pour décider, par comparaison à un seuil, de la détection ou non d'une rafale d'accès aléatoire sur le canal RACH. Cette évaluation prend avantageusement en compte les conditions de propagation sur ce canal.

Le signal détecté par le système récepteur 2 à la suite de l'émission d'une rafale peut s'écrire sous la forme Z = a.s + n, où a désigne l'atténuation ou gain du canal de propagation et n désigne le bruit blanc gaussien capté par le système 2.

En sortie des filtres 3 adaptés à la séquence s, le signal s'écrit alors z = a.|s|$^2$ + n', où n' = n.s* a également les propriétés d'un bruit gaussien. Sans affecter la généralité, on peut considérer les séquences s comme normées, soit |s|$^2$ = 1.

La probabilité de détecter le signal z après filtrage adapté sachant que la séquence prédéfinie a été émise sur le RACH peut alors s'écrire : $P(z/H1) = \dfrac{1}{\sqrt{\pi N_0}} . \int_C e^{-\frac{1}{N_0}.|z-a|^2} .p(a).da$ , avec C l'ensemble des réalisations possibles du gain complexe a sur le canal de propagation, $N_0$ la puissance du bruit et p(a) la densité de probabilité du gain a. De même, la probabilité de détecter le signal z après filtrage adapté sachant que seul du bruit a été reçu peut s'écrire : $P(z/H0) = \dfrac{1}{\sqrt{\pi N_0}} .e^{-\frac{1}{N_0}.|z|^2}$ . On en déduit la relation :

$$\frac{P(z/H1)}{P(z/H0)} = \int_C e^{-\frac{1}{N_0}.(|a|^2 - 2.\Re e(za^*))} .p(a).da \qquad (2)$$

Si on développe le signal z selon ses deux composantes pour chacune des deux voies, on a z = $z_x$ + j $z_y$. De même, on peut écrire le gain du canal de propagation a sous la forme : a = $a_x$ + j $a_y$. L'indépendance des deux variables aléatoires $a_x$ et $a_y$ permet de factoriser la densité de probabilité p(a) sous la forme : $p_x(a_x).p_y(a_y)$ et d'écrire:

$$\frac{P(z/H1)}{P(z/H0)} = \int_C e^{-\frac{1}{N_0}.(a_x^2 + a_y^2 - 2(z_x a_x + z_y a_y))} .p_x(a_x)p_y(a_y).da_x da_y$$

$$= \left( \int_R e^{-\frac{1}{N_0}.(a_x^2 - 2z_x a_x)} .p_x(a_x).da_x \right) \left( \int_R e^{-\frac{1}{N_0}.(a_y^2 - 2z_y a_y)} .p_y(a_y).da_y \right) \qquad (3)$$

où R désigne l'ensemble des nombres réels.

Par ailleurs, les polynômes de Hermite sont des polynômes d'ordre n, n étant un entier naturel, qui satisfont l'équation différentielle suivante : $-H_n''(x) + 2x.H_n'(x) = 2n.H_n(x)$. Les premiers polynômes de Hermite, pour des ordres allant de 0 à 5 sont les suivants :

$H_0(x) = 1$ ;      $H_1(x) = 2x$ ;
$H_2(x) = 4x^2 - 2$ ;      $H_3(x) = 8x^3 - 12x$ ;

(suite)

$$H_4(x) = 16x^4 - 48x^2 + 12 \; ; \qquad H_5(x) = 32x^5 - 160x^3 + 120x \; .$$

Ces polynômes satisfont l'équation: $e^{2uv - u^2} = \sum\limits_{n=0}^{\infty} H_n(v) . \dfrac{u^n}{n!}$ , de sorte qu'on peut écrire:

$$\int\limits_{R} e^{-\frac{1}{N_0} . (a_x^2 - 2z_x a_x)} . p_x(a_x) . da_x = \int\limits_{R} \left( \sum\limits_{n=0}^{\infty} \frac{1}{n!} . H_n\left( \frac{z_x}{\sqrt{N_0}} \right) \left( \frac{a_x}{\sqrt{N_0}} \right)^n \right) . p_x(a_x) . da_x$$

$$= \sum\limits_{n=0}^{\infty} \frac{1}{n! \left( \sqrt{N_0} \right)^n} . H_n\left( \frac{z_x}{\sqrt{N_0}} \right) . ma_{x,n}$$

avec $ma_{x,n} = \int\limits_{R} a_x^n . p_x(a_x) . da_x$ représentant le moment d'ordre n de la distribution de la composante en phase du gain du canal de propagation. De même :

$$\int\limits_{R} e^{-\frac{1}{N_0} . (a_y^2 - 2z_y a_y)} . p_y(a_y) . da_y = \sum\limits_{n=0}^{\infty} \frac{1}{n! \left( \sqrt{N_0} \right)^n} . H_n\left( \frac{z_y}{\sqrt{N_0}} \right) . ma_{y,n} \; ,$$

avec $ma_{y,n} = \int\limits_{R} a_y^n . p_y(a_y) . da_y$ représentant le moment d'ordre n de la distribution de la composante en quadrature du gain du canal de propagation.

Par conséquent, le rapport de probabilités P(z/H1) / P(z/H0) peut s'écrire :

$$\frac{P(z/H1)}{P(z/H0)} = \left( \sum\limits_{n=0}^{\infty} \frac{1}{n! \left( \sqrt{N_0} \right)^n} . H_n\left( \frac{z_x}{\sqrt{N_0}} \right) . ma_{x,n} \right) \left( \sum\limits_{n=0}^{\infty} \frac{1}{n! \left( \sqrt{N_0} \right)^n} . H_n\left( \frac{z_y}{\sqrt{N_0}} \right) . ma_{y,n} \right) \quad (4)$$

Selon l'invention, un module de calcul 5 du système récepteur 2 estime les moments $ma_{x,n}$ et $ma_{y,n}$ en sortie des filtres adaptés 3 pour chacune des deux voies de réception respectivement.

Cette évaluation est effectuée sur un intervalle de temps dit intervalle d'évaluation qui correspond à un nombre de chips inférieur au nombre de positionnements possibles de la rafale d'accès aléatoire à l'intérieur de deux slots consécutifs. Si l'on reprend le cas de l'UMTS, où il existe 1024 positions possibles de la rafale à l'intérieur de 2 slots consécutifs, on peut choisir par exemple un intervalle d'évaluation correspondant à 32 chips.

L'évaluation des moments consiste alors à estimer la probabilité $p_x(a_x)$, $p_y(a_y)$ de trouver chaque valeur d'une composante caractéristique du gain du canal de propagation $a_{x,n}$ et $a_{y,n}$, dans l'échantillon correspondant du signal détecté dans l'intervalle d'évaluation. Ces probabilités sont ensuite pondérées par la puissance $n^{ième}$ de la valeur de composante associée, avant d'être sommées, comme cela est indiqué par les formules

$$ma_{x,n} = \int\limits_{R} a_x^n . p_x(a_x) . da_x \quad \text{et} \quad ma_{y,n} = \int\limits_{R} a_y^n . p_y(a_y) . da_y \quad \text{respectivement.}$$

Après chaque nouvelle évaluation, le module 5 de calcul des moments envoie le résultat de son calcul à un module 6 de détection du RACH du système récepteur 2. Ce module calcule le rapport de probabilités P(z/H1) / P(z/H0) grâce à la formule (4), en tronquant la sommation à un ordre k par exemple de 3 à 7 :

$$\frac{P(z/H1)}{P(z/H0)} = \left( \sum_{n=0}^{k} \frac{1}{n!\left(\sqrt{N_0}\right)^n} . H_n\left(\frac{z_x}{\sqrt{N_0}}\right) . ma_{x,n} \right) \left( \sum_{n=0}^{k} \frac{1}{n!\left(\sqrt{N_0}\right)^n} . H_n\left(\frac{z_y}{\sqrt{N_0}}\right) . ma_{y,n} \right).$$

Ce calcul est aisé puisque les moments $ma_{x,n}$ et $ma_{y,n}$ ont été fournis par le module 5. La variance $N_0$ du bruit est classiquement disponible dans le récepteur, à partir d'une moyenne de l'énergie du signal complexe en sortie des filtres adaptés 3.

Il est particulièrement avantageux que le nombre k soit supérieur à 2, pour prendre en compte des moments d'ordre élevé qui traduisent finement le comportement du canal.

Le module de détection 6 peut mémoriser des tables donnant pour certaines valeurs types, la valeur correspondante pour les polynômes de Hermite. Ceci permet de déterminer facilement la valeur du rapport P(z/H1) / P(z/H0) pour toute nouvelle valeur détectée de $z_x$ et $z_y$ à l'intérieur de l'intervalle d'évaluation des moments.

Le rapport de probabilités ainsi estimé est alors comparé par le module de détection 6 à un seuil c' par exemple fixé selon un objectif de fiabilité de détection des RACH. Si le rapport P(z/H1) / P(z/H0) est supérieur à c' (ce qui correspond au fait que le rapport P(H1/z)/ P(H0/z) dépasse lui-même un certain seuil comme cela a été vu plus haut), le système récepteur 2 considère alors que la séquence prédéfinie a été émise sur le canal RACH. Des ressources vont pouvoir ainsi être mise à disposition du terminal demandeur.

Dans le cas contraire, où le rapport P(z/H1) / P(z/H0) est inférieur à c', le système de réception 2 peut décider de conclure qu'aucune séquence n'a été émise sur le canal RACH.

Bien sûr, dans le cas où la décision du système récepteur 2 est erronée, par exemple s'il ignore une requête émise par le terminal 1 sur le RACH, le terminal, qui ne reçoit pas la réponse attendue, peut appliquer une méthode de répétition pour améliorer la fiabilité de la détection par le système récepteur 2, par exemple en mettant en oeuvre une rampe de puissance.

Comme cela a été indiqué plus haut, l'invention s'applique également à tout autre type de signal transmis à l'intérieur d'une fenêtre de réception de taille supérieure à celle de la séquence numérique associée au signal transmis. Par exemple, elle peut s'appliquer à la détection d'un message de synchronisation transmis par une station de base à l'attention d'un terminal mobile sur un canal SCH (« Synchronisation Channel ») dans un système GSM ou UMTS par exemple. Le SCH est décrit à la section 5.3.3.5 de la spécification technique TS 25.211 précitée. Il est constitué de deux sous-canaux : un SCH primaire et un SCH secondaire. Chacun de ces sous-canaux peut porter des messages de 256 chips, donc de taille très inférieure à celle d'un slot (2560 chips).

Dans ce cas, l'émetteur sur le canal SCH est une station de base du réseau radio, tandis que le système récepteur tel que décrit plus haut fait partie d'un terminal mobile. La rafale appartient à une séquence de signal radio émise périodiquement pour synchroniser les deux extrémités du lien radio. La fiabilité de l'estimation des moments $ma_{x,n}$ et $ma_{y,n}$ s'en trouve renforcée car les moments sont alors estimés sur une durée pouvant être plus longue que dans le cas du canal RACH, c'est-à-dire une durée couvrant plusieurs périodes de la séquence de signal radio émise sur le canal SCH. On choisira typiquement une durée de l'ordre de celle pendant laquelle on peut considérer le canal comme stationnaire ($\leq$ 100 ms). En UMTS, la rafale prédéfinie émise sur le canal SCH représente environ 10% de chaque slot. On peut par exemple calculer les moments sur cinq trames, soit 50 ms ou 75 slots.

Il faut également noter que la présente invention s'applique également à tout autre type de système de radiocommunication où une détection des signaux transmis est nécessaire (radar par exemple).

Dans un autre mode de réalisation avantageux, le système récepteur utilisé est un récepteur en râteau ("rake"), qui comporte un certain nombre de "doigts" fonctionnant en parallèle pour estimer les symboles numériques reçus. Le gain en diversité de réception résulte de la combinaison des estimations obtenues dans les différents doigts du récepteur.

Dans ce cas, on transmet un signal z contenant une séquence pilote connue du système récepteur à des instants prédéterminés. Le signal peut par exemple être transmis sur des canaux dédiés ou communs, des canaux de trafic notamment. Le système récepteur évalue alors, pour un certain nombre de doigts du rake, des moments $ma_{x,n}$ et $ma_{y,n}$ et un rapport de probabilités P(z/H1) / P(z/H0) basé sur ces moments.

Lorsque des valeurs successives du rapport P(z/H1) / P(z/H0) ont été obtenues pour chacun de ces doigts, ceux-ci font alors l'objet d'un classement pour identifier les doigts pour lesquels le signal transmis a été détecté avec une forte corrélation sur la base de la séquence pilote, c'est-à-dire les doigts qui ont une contribution prépondérante dans la détection des signaux transmis. Les doigts ainsi identifiés peuvent alors être sélectionnés par le système récepteur pour être utilisés lors des prochaines réceptions.

**Revendications**

1. Procédé de détection d'une rafale de signal transmise à l'initiative d'un émetteur (1) sur un canal radio écouté par un système récepteur (2), la rafale transmise représentant une séquence numérique prédéterminée, le procédé comprenant les étapes suivantes :

   - estimer des paramètres de canal représentant un comportement statistique du canal radio ;
   - évaluer une grandeur de détection à partir des paramètres de canal estimés et d'une corrélation entre un signal reçu au système récepteur et la séquence numérique prédéterminée ; et
   - comparer la grandeur de détection à un seuil pour déterminer si une rafale a été ou non reçue par le système récepteur,

   **caractérisé en ce que** lesdits paramètres de canal estimés comprennent des moments d'ordre supérieur à 2 du gain sur le canal radio.

2. Procédé selon la revendication 1, dans lequel lesdits paramètres de canal estimés comprennent des moments d'ordre 0 à k du gain sur le canal radio, où k est un entier plus grand que 2.

3. Procédé selon la revendication 1 ou 2, dans lequel le signal reçu est soumis à un filtrage adapté à la séquence numérique prédéterminée pour obtenir ladite corrélation sous forme d'un signal complexe ayant une première composante sur une voie en phase ($z_x$) et une seconde composante sur une voie en quadrature ($z_y$).

4. Procédé selon la revendication 3, dans lequel la grandeur de détection évaluée est proportionnelle à

$$\left( \sum_{n=0}^{k} \frac{1}{n! \left( \sqrt{N_0} \right)^n} . H_n \left( \frac{z_x}{\sqrt{N_0}} \right) . ma_{x,n} \right) . \left( \sum_{n=0}^{k} \frac{1}{n! \left( \sqrt{N_0} \right)^n} . H_n \left( \frac{z_y}{\sqrt{N_0}} \right) . ma_{y,n} \right),$$ où $N_0$ désigne la puissance estimée du bruit sur le canal radio, $z_x$ et $z_y$ désignent lesdites première et seconde composantes, $ma_{x,n}$ et $ma_{y,n}$ désignent les moments d'ordre n du gain respectivement sur la voie en phase et sur la voie en quadrature, $H_n$ désigne le polynôme de Hermite d'ordre n et k est un entier plus grand que 2.

5. Procédé selon l'une quelconque des revendications 1 à 4, dans lequel ledit émetteur (1) est un terminal mobile, ledit système récepteur (2) appartient à un réseau de radiocommunication et dans lequel ladite rafale est émise pour requérir l'accès au réseau.

6. Procédé selon l'une quelconque des revendications 1 à 4, dans lequel ledit émetteur (1) comprend une station de base d'un réseau de radiocommunication, ledit système récepteur (2) fait partie d'un terminal mobile, et dans lequel ladite rafale est émise pour la synchronisation temporelle entre l'émetteur et le système récepteur.

7. Procédé selon l'une quelconque des revendications précédentes, dans lequel le système récepteur (2) comprend un récepteur en râteau, dans lequel la grandeur de détection est évaluée pour chacun d'une pluralité de doigts du récepteur en râteau, et dans lequel on sélectionne au moins un doigt de ladite pluralité de doigts du récepteur en râteau à partir des grandeurs de réception évaluées.

8. Procédé selon l'une quelconque des revendications précédentes, dans lequel la rafale appartient à une séquence de signal radio émise périodiquement, et dans lequel lesdits moments sont estimés sur une durée couvrant plusieurs périodes de ladite séquence de signal radio.

9. Système récepteur radio (2) agencé pour mettre en oeuvre le procédé selon l'une quelconque des revendications précédentes et comprenant :

   - des moyens pour estimer des paramètres de canal représentant un comportement statistique du canal radio ;
   - des moyens pour évaluer une grandeur de détection à partir des paramètres de canal estimés et d'une corrélation entre un signal reçu au système récepteur et la séquence numérique prédéterminée ; et
   - des moyens (6) pour comparer la grandeur de détection à un seuil pour déterminer si une rafale a été ou non reçue par le système récepteur,

**caractérisé en ce que** les moyens pour estimer des paramètres de canal représentant un comportement statistique du canal radio comprennent des moyens (5) pour estimer des moments d'ordre supérieur à 2 du gain sur le canal radio.

**Claims**

1. A method for detecting a signal burst transmitted on the initiative of a sender (1) on a radio channel listened to by a receiver system (2), the transmitted burst representing a predetermined digital sequence, the method comprising the following steps:

   - estimating channel parameters representing a statistical behavior of the radio channel;
   - evaluating a detection magnitude from the estimated channel parameters and a correlation between a signal received at the receiver system and the predetermined digital sequence; and
   - comparing the detection magnitude to a threshold to determine whether a burst has been received or not by the receiver system,

   **characterized in that** said estimated channel parameters comprise moments of order greater than 2 of the gain on the radio channel.

2. The method as claimed in claim 1, in which said estimated channel parameters comprise moments of order 0 to k of the gain on the radio channel, where k is an integer larger than 2.

3. The method as claimed in claim 1 or 2, in which the signal received is subjected to a filtering matched to the predetermined digital sequence so as to obtain said correlation in the form of a complex signal having a first component on an in-phase path ($z_x$) and a second component on a quadrature path ($z_y$).

4. The method as claimed in claim 3, in which the evaluated detection magnitude is proportional to

$$\left( \sum_{n=0}^{k} \frac{1}{n!\left(\sqrt{N_0}\right)^n} . H_n\left( \frac{z_x}{\sqrt{N_0}} \right) . ma_{x,n} \right)\left( \sum_{n=0}^{k} \frac{1}{n!\left(\sqrt{N_0}\right)^n} . H_n\left( \frac{z_y}{\sqrt{N_0}} \right) . ma_{y,n} \right),$$ where $N_0$ denotes the estimated

   power of the noise on the radio channel, $z_x$ and $z_y$ denote said first and second components, $ma_{x,n}$ and $ma_{y,n}$ denote the moments of order n of the gain on the in-phase path and on the quadrature path respectively, $H_n$ denotes the Hermite polynomial of order n and k is an integer larger than 2.

5. The method as claimed in any one of claims 1 to 4, in which said sender (1) is a mobile terminal, said receiver system (2) belongs to a radiocommunication network and in which said burst is sent so as to request access to the network.

6. The method as claimed in any one of claims 1 to 4, in which said sender (1) comprises a base station of a radiocommunication network, said receiver system (2) forms part of a mobile terminal, and in which said burst is sent for the temporal synchronization between the sender and the receiver system.

7. The method as claimed in any one of the preceding claims, in which the receiver system (2) comprises a rake receiver, in which the detection magnitude is evaluated for each one of a plurality of fingers of the rake receiver, and in which at least one finger of said plurality of fingers of the rake receiver is selected from the evaluated detection magnitudes.

8. The method as claimed in any one of the preceding claims, in which the burst belongs to a radio signal sequence sent periodically, and in which said moments are estimated over a duration covering several periods of said radio signal sequence.

9. A radio receiver system (2) arranged for implementing the method as claimed in any one of the preceding claims and comprising:

   - means for estimating channel parameters representing a statistical behavior of the radio channel;
   - means for evaluating a detection magnitude from the estimated channel parameters and a correlation between a signal received at the receiver system and the predetermined digital sequence; and
- means (6) for comparing the detection magnitude to a threshold to determine whether a burst has been received or not by the receiver system,

**characterized in that** the means for estimating channel parameters representing a statistical behavior of the radio channel comprise means (5) for estimating moments of order greater than 2 of the gain on the radio channel.

**Patentansprüche**

1. Verfahren zum Erfassen eines Signalbursts, der auf Betreiben eines Senders (1) auf einem Funkkanal, der von einem Empfangssystem (2) abgehört wird, übertragen wird, wobei der übertragene Burst einer vorbestimmten digitalen Sequenz entspricht, wobei das Verfahren die folgenden Schritte aufweist:

   - Schätzen der Kanalparameter, die ein statistisches Verhalten des Funkkanals darstellen,
   - Schätzen einer Erfassungsgröße ausgehend von den geschätzten Kanalparametern und einer Korrelation zwischen einem am Empfangssystem empfangenen Signal und der vorbestimmten digitalen Sequenz, und
   - Vergleichen der Erfassungsgröße mit einem Schwellenwert, um zu bestimmen, ob ein Burst von dem Empfangssystem empfangen wurde oder nicht,

   **dadurch gekennzeichnet, dass** die geschätzten Kanalparameter Augenblicke mit Rang größer als 2 der Verstärkung auf dem Funkkanal aufweisen.

2. Verfahren nach Anspruch 1, bei dem die geschätzten Kanalparameter Augenblicke des Rangs 0 bis k der Verstärkung auf dem Funkkanal aufweisen, wobei k eine Ganzzahl größer als 2 ist.

3. Verfahren nach Anspruch 1 oder 2, bei dem das empfangene Signal einem Filtern angepasst ist, das an die vorbestimmte digitale Sequenz angepasst ist, um die Korrelation in Form eines komplexen Signals zu erzielen, das eine erste Komponente auf einem Phasenkanal ($z_x$) und eine zweite Komponente auf einem Quadraturkanal ($z_y$) hat.

4. Verfahren nach Anspruch 3, bei dem die geschätzte Erfassungsgröße anteilsmäßig ist zu

$$\left( \sum_{n=0}^{k} \frac{1}{n! \left( \sqrt{N_0} \right)^n} . H_n \left( \frac{z_x}{\sqrt{N_0}} \right) . ma_{x,n} \right) \left( \sum_{n=0}^{k} \frac{1}{n! \left( \sqrt{N_0} \right)^n} . H_n \left( \frac{z_y}{\sqrt{N_0}} \right) . ma_{y,n} \right),$$

   wobei $N_0$ die geschätzte Rauschleistung auf dem Funkkanal bezeichnet, $z_x$ und $z_y$ die erste und die zweite Komponente bezeichnen, $ma_{x,n}$ und $ma_{y,n}$ die Augenblicke mit dem Rang n der Verstärkung jeweils auf dem Phasenkanal und auf dem Quadraturkanal bezeichnen, $H_n$ das Hermitische Polynom mit Rang n bezeichnet und k eine Ganzzahl größer als 2 ist.

5. Verfahren nach einem der Ansprüche 1 bis 4, bei dem der Sender (1) ein Mobilterminal ist, wobei das Empfangssystem (2) zu einem Funkkommunikationsnetz gehört, und wobei der Burst gesendet wird, um Zugang zum Netz anzufordern.

6. Verfahren nach einem der Ansprüche 1 bis 4, bei dem der Sender (1) eine Basisstation eines Funkkommunikationsnetzes aufweist, wobei das Empfangssystem (2) zu einem Mobilterminal gehört, und bei dem der Burst zum Zeitsynchronisieren zwischen dem Sender und dem Empfangssystem gesendet wird.

7. Verfahren nach einem der vorhergehenden Ansprüche, bei dem das Empfangssystem (2) einen Rechenempfänger aufweist, bei dem die Erfassungsgröße bewertet wird, damit jeder mehrerer Finger des Rechenempfängers geschätzt wird, und bei dem man mindestens einen Finger der mehreren Finger des Rechenempfängers ausgehend von den geschätzten Empfangsgrößen auswählt.

8. Verfahren nach einem der vorhergehenden Ansprüche, bei dem der Burst zu einer Funksignalsequenz gehört, die regelmäßig gesendet wird, und wobei die Augenblicke über eine Dauer geschätzt werden, die mehrere Perioden der Funksignalsequenz deckt.

9. Funkempfängersystem (2), das eingerichtet ist, um das Verfahren nach einem der vorhergehenden Ansprüche umzusetzen und Folgendes aufweist:

- Mittel zum Schätzen der Kanalparameter, die ein statistisches Verhalten des Funkkanals darstellen,
- Mittel zum Schätzen einer Erfahrungsgröße ausgehend von den geschätzten Kanalparametern und einer Korrelation zwischen einem an dem Empfangssystem empfangenen Signal und der vorbestimmten digitalen Sequenz, und
- Mittel (6) zum Vergleichen der Erfassungsgröße mit einem Schwellenwert, um zu bestimmen, ob ein Burst von dem Empfangssystem empfangen wurde oder nicht,

**dadurch gekennzeichnet, dass** die Mittel zum Schätzen der Kanalparameter, die ein statistisches Verhalten des Funkkanals darstellen, Mittel (5) zum Schätzen der Augenblicke mit Rang größer als 2 der Verstärkung auf dem Funkkanal aufweisen.

FIG. Unique

EP 1 427 156 B1